# FASCICULE DE BREVET EUROPEEN

(11) **EP 1 750 968 B1**
(45) Date de publication et mention de la délivrance du brevet: **25.11.2009**
(21) Numéro de dépôt: 05780142.5
(22) Date de dépôt: 31.05.2005
(51) Int. Cl.: B60K 6/387, B60K 6/405, F16D 21/06

(54) **ELEMENT DE TRANSMISSION A DOUBLE EMBRAYAGE POUR CHAINE DE TRACTION HYBRIDE DE VEHICULE AUTOMOBILE, PROCEDE DE MONTAGE, ET VEHICULE AUTOMOBILE EQUIPE D'UN TEL ELEMENT**
DOPPELKUPPLUNGSGETRIEBEELEMENT FÜR EINEN HYBRIDANTRIEBSSTRANG EINES KRAFTFAHRZEUGES, VERFAHREN ZU DESSEN MONTAGE UND KRAFTFAHRZEUG MIT DERARTIGEM ELEMENT
DOUBLE-CLUTCH TRANSMISSION ELEMENT FOR A HYBRID PULL CHAIN OF A MOTOR VEHICLE, METHOD OF MOUNTING SAME, AND MOTOR VEHICLE EQUIPPED WITH ONE SUCH ELEMENT

(30) Priorité: 03.06.2004 FR 0406026
(43) Date de publication de la demande: 14.02.2007
(73) Titulaire: PEUGEOT CITROËN AUTOMOBILES S.A., 78140 Vélizy Villacoublay (FR)
(72) Inventeur: COMBES, Emmanuel, F-91410 SAINT-CYR-SOUS-DOURDAN (FR); FOCQUEUR, Hervé, F-95130 FRANCONVILLE (FR)
(86) Numéro de dépôt international: PCT/FR2005/050393
(87) Numéro de publication internationale: WO 2005/118321

(56) Documents cités:
- EP-A- 1 541 401
- WO-A-99/22955
- FR-A- 2 796 600
- FR-A- 2 814 517

## Description

L'invention concerne un élément de transmission pour une chaîne de traction de type hybride parallèle.

On entend par chaîne de traction hybride parallèle une chaîne de traction fournissant à un arbre de roue une énergie mécanique à partir d'au moins un moteur de type « irréversible » (en général un moteur thermique) et d'au moins un moteur de type « réversible » (en général une machine électrique que l'on désignera aussi par la suite par le terme « moteur électrique », étant entendu que ce « moteur » pourra fonctionner suivant un mode moteur et un mode générateur), et dans laquelle le noeud d'énergie provenant des deux moteurs est de nature mécanique.

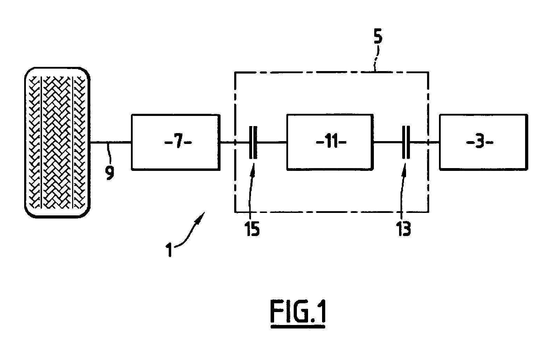

On a représenté sur la Figure 1, de façon schématique, une chaîne de traction hybride parallèle de type connu (par exemple par la demande de brevet français publiée sous le n° 2 814 121) à laquelle s'applique plus particulièrement l'invention.

Une telle chaîne de traction 1 comprend donc essentiellement un moteur thermique (ou plus généralement un moteur irréversible) 3, un élément de transmission 5, et une boîte de vitesses 7, dont l'entrée est reliée à l'élément de transmission 5 et la sortie à un arbre de roue 9.

L'élément de transmission 5 comporte une machine électrique (ou plus généralement un moteur réversible) 11 de la chaîne de traction hybride, ainsi qu'un premier embrayage 13 de liaison entre le moteur thermique 3 et la machine électrique 11, et un deuxième embrayage 15 de liaison entre la machine électrique 11 et la boîte de vitesses 7.

L'invention concerne donc plus particulièrement un élément de transmission pour une chaîne de traction de type hybride parallèle, ledit élément comprenant un arbre d'entrée de mouvement destiné à être relié à un moteur thermique, un arbre de sortie de mouvement destiné à être relié à une boîte de vitesses, un moteur électrique comportant un stator et un rotor, un premier embrayage de liaison entre l'arbre d'entrée et un organe intermédiaire, et un second embrayage de liaison entre l'organe intermédiaire et l'arbre de sortie, l'organe intermédiaire étant lié en rotation au rotor.

Dans les chaînes de traction hybride connues, du type précédemment décrit, l'élément de transmission intégrant le moteur électrique et les deux embrayages de liaison, respectivement au moteur thermique et à la boîte de vitesses, n'est pas prévu pour être facilement interchangeable avec un embrayage simple tel qu'il est utilisé dans les chaînes de traction classiques à une seule source d'énergie.

Le document WO 99/22955 A divulgue les caractéristiques du préambule de la revendication 1.

Le problème que se propose de résoudre l'invention consiste à concevoir un élément de transmission tel que décrit précédemment, qui puisse s'adapter à une chaîne de traction mono-source classique, et se substituer à un embrayage simple, pour former une chaîne de traction du type hybride parallèle, sans modification majeure des autres éléments de la chaîne de traction.

A cet effet, l'élément de transmission selon l' invention est conforme à la revendication 1.

L'intérêt de l'invention s'explique essentiellement par le faible nombre de véhicules à propulsion hybride produits de nos jours, en comparaison du nombre de véhicules du même modèle à propulsion classique, en général thermique. Ainsi, pour un modèle de véhicule donné, un constructeur automobile produit quotidiennement un grand nombre de boîtes de vitesses, de « packs-embrayage » (ou boîtes d'embrayage) simples, et de moteurs thermiques d'un même type, tandis qu'il produit un faible nombre d'éléments de transmission, à moteur électrique et double embrayage, pour chaîne hybride.

L'avantage essentiel apporté par l'invention consiste à procurer un élément de transmission à moteur électrique et double embrayage, qui se présente sous la forme d'une « boîte » ou « module » autonome, qui puisse se monter en lieu et place du pack-embrayage simple, sans modification majeure de la boîte de vitesses ou du moteur thermique. Le constructeur peut, grâce à l'invention, passer d'une façon extrêmement souple d'une production de véhicules à propulsion thermique, à une production de véhicules à propulsion hybride, et inversement, moyennant le changement d'un seul des composants de la chaîne de traction. Les productions peuvent être effectuées éventuellement sur la même chaîne de fabrication.

Suivant d'autres caractéristiques de l'invention, prises seules ou selon toutes les combinaisons techniquement envisageables :
- les deux embrayages sont agencés radialement à l'intérieur de la machine électrique ;
- la première demi-coquille est solidaire du stator et supporte à rotation le rotor ;
- les deux embrayages, les arbres d'entrée et de sortie, et l'organe intermédiaire font partie d'un module agencé d'un seul tenant dans le logement ;
- l'organe intermédiaire et le rotor sont mutuellement en prise par des dentures complémentaires axiales ;
- les deux embrayages sont de type humide, le logement étant fermé de façon étanche à un fluide de lubrification et/ou de refroidissement ;
- les deux embrayages sont rappelés en position embrayée ;
- les deux embrayages sont disposés de façon étagée, l'un étant disposé radialement à l'extérieur par rapport à l'autre ;
- le premier embrayage est disposé radialement à l'extérieur par rapport au deuxième embrayage ;
- le stator est disposé radialement à l'extérieur du rotor, et le deuxième embrayage est disposé radialement à l'intérieur du rotor ;
- l'un au moins des embrayages, de préférence les deux, est actionné au moyen d'un fluide de commande par l'intermédiaire d'une pièce de pression respective unique ; et
- l'élément de transmission comporte un tube axial d'alimentation en fluide, notamment d'alimentation hydraulique, solidaire de l'une des demi-coquilles et faisant saillie vers l'intérieur du logement.

L'invention vise également un véhicule automobile comprenant une chaîne de traction de type hybride parallèle, ladite chaîne de traction comprenant un moteur thermique, une boîte de vitesses, et un élément de transmission tel que décrit précédemment, reliant le moteur thermique à la boîte de vitesses.

L'invention vise également un procédé d'assemblage d'un élément de transmission tel que décrit précédemment.

Suivant un premier mode de réalisation, le procédé comprend les étapes successives suivantes :
- on monte un sous-ensemble comprenant solidairement le premier embrayage, le deuxième embrayage, et l'organe intermédiaire, sur un sous-ensemble comprenant la deuxième demi-coquille ; et
- on monte un sous-ensemble comprenant solidairement la première demi-coquille et la machine électrique, sur l'ensemble ainsi formé.

Suivant un deuxième mode de réalisation, le procédé comprend les étapes successives suivantes :
- on monte un sous-ensemble comprenant solidairement le premier embrayage, le deuxième embrayage, et l'organe intermédiaire, sur un sous-ensemble comprenant solidairement la première demi-coquille et la machine électrique ; et
- on monte l'ensemble ainsi formé sur un sous-ensemble comprenant la deuxième demi-coquille.

De préférence, on monte préalablement le tube d'alimentation sur la deuxième demi-coquille, de façon à assembler le sous-ensemble comprenant la deuxième demi-coquille.

Des modes particuliers de réalisation de l'invention vont maintenant être décrits plus en détail en référence aux Figures 2, 3, 4A à 4J des dessins annexés, sur lesquels :
- la Figure 2 est une vue partielle en demi-coupe axiale d'un élément de transmission selon l'invention ;
- la Figure 3 est une vue de détail de la figure 2, à plus grande échelle, qui représente le deuxième module de l'élément de transmission, comprenant essentiellement les embrayages, les arbres d'entrée et de sortie, l'organe intermédiaire, et les pistons ; et
- les Figures 4A à 4J sont des vues analogues, à plus petite échelle, illustrant les étapes successives d'un mode particulier d'assemblage de l'élément de transmission.

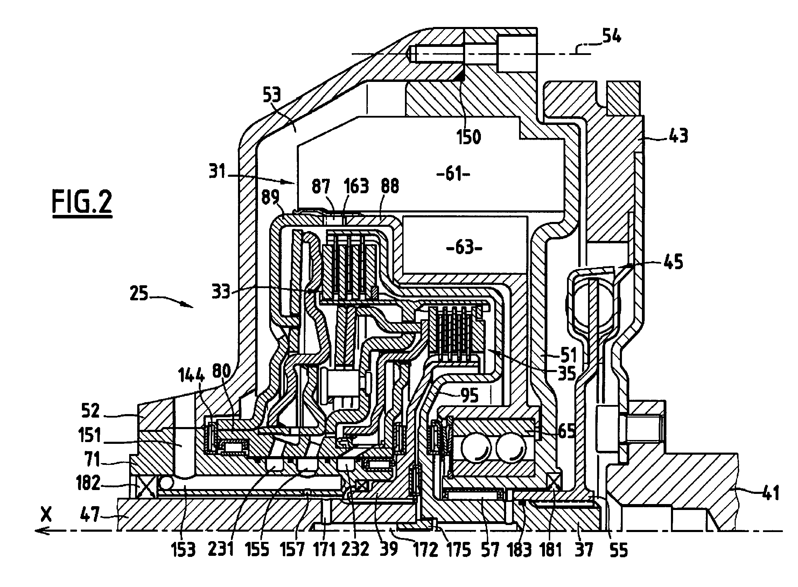

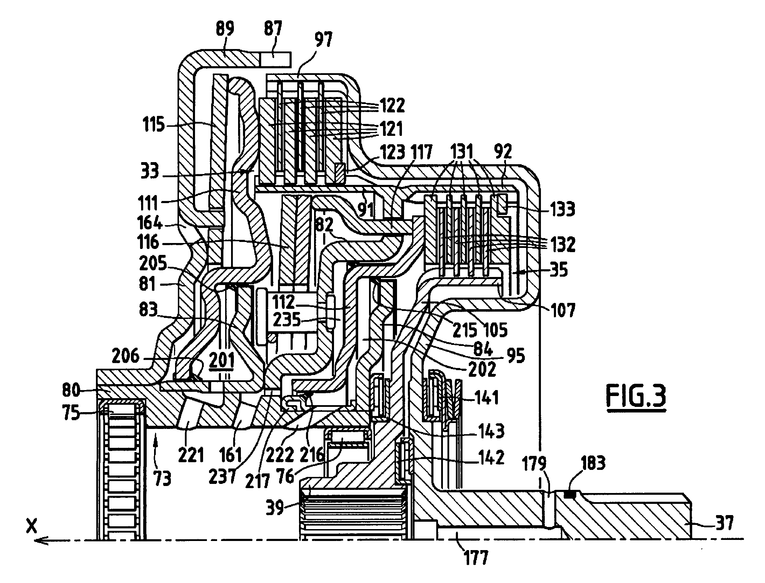

Sur les Figures 2 et 3, on a représenté un élément de transmission 25 conforme à l'invention, destiné à relier, comme l'élément 5 sur la Figure 1, un moteur thermique à une boîte de vitesses. Comme l'élément 5, l'élément 25 de l'invention comporte une machine électrique 31 que l'on appellera aussi « moteur électrique », un premier embrayage 33, et un deuxième embrayage 35.

L'élément de transmission 25 comporte en outre un arbre d'entrée de mouvement 37 et un arbre de sortie de mouvement 39 coaxiaux d'axe X. L'axe X est orienté de l'entrée vers la sortie pour la commodité de la description qui va suivre.

Les termes « amont » et « aval » s'entendront en référence à cette orientation.

L'arbre d'entrée 37 est solidaire en rotation du vilebrequin du moteur thermique, dont une partie, ou « nez », est représentée sur la figure 2 sous la référence 41.

Dans l'exemple représenté, le vilebrequin 41 est muni d'un volant d'inertie 43, et relié à l'arbre d'entrée 37 par l'intermédiaire d'un dispositif amortisseur 45.

L'arbre de sortie 39 est lié en rotation à l'arbre primaire d'entrée de boîte de vitesses, dont une partie est représentée sur la figure 2 sous la référence 47.

L'élément de transmission 25 comprend un carter constitué essentiellement d'une première demi-coquille 51 et d'une deuxième demi-coquille 52, assemblées par des moyens de fixation répartis sur la périphérie du carter et symbolisés sur les figures par des lignes mixtes 54. Les demi-coquilles de carter 51, 52 délimitent intérieurement un logement 53, à l'intérieur duquel sont agencés le moteur électrique 31, les embrayages 33, 35 et les arbres d'entrée 37 et de sortie 39, de façon coaxiale.

L'arbre d'entrée 37 et l'arbre de sortie 39 sont montés rotatifs par rapport au carter 51, 52.

L'arbre d'entrée 37 est un arbre cannelé complémentaire d'un arbre creux 55 du dispositif amortisseur 45, et une partie d'extrémité de l'arbre d'entrée 37 fait saillie axialement de la première demi-coquille 51. L'arbre d'entrée 37 est monté rotatif sur la première demi-coquille 51 par l'intermédiaire d'un palier de roulement 57.

L'arbre de sortie 39 est un arbre creux à cannelures internes, de forme complémentaire de l'extrémité d'arbre d'entrée de boîte 47. Pour être mise en prise avec l'arbre de sortie 39, l'extrémité de l'arbre d'entrée de boîte 47 fait saillie à l'intérieur du logement 53.

Le moteur électrique 31 comprend un stator 61, pourvu d'un collecteur, solidaire de la première demi-coquille de carter 51, et un rotor 63 monté rotatif sur la première demi-coquille 51 par l'intermédiaire d'un roulement 65. Le rotor 63 est agencé radialement à l'intérieur du stator 61.

Les premier 33 et deuxième 35 embrayages sont de type humide, et l'élément de transmission 25 est muni d'un tube axial 71 de distribution de fluide de lubrification et de refroidissement ainsi que de commande. Ce tube 71 fait saillie à l'intérieur du logement 53 de la deuxième coquille de carter 52.

L'élément de transmission 25 comporte un organe intermédiaire de transmission 73 monté rotatif sur le tube 71, radialement à l'extérieur, par l'intermédiaire de deux roulements 75, 76.

L'organe intermédiaire 73 est formé essentiellement avec un moyeu 80, et quatre parois radiales 81, 82, 83, 84 décalées axialement les unes par rapport aux autres, et rendues solidaires du moyeu 80 par soudure pour les parois 81, 82, 84, et par frettage pour la paroi 83.

L'organe intermédiaire 73 est lié en rotation au rotor 63 par l'intermédiaire de dents axiales complémentaires 87 mutuellement en prise, et formées respectivement sur une partie périphérique du rotor 63, et sur une partie périphérique de la première paroi radiale 81.

La deuxième paroi radiale 82 est formée avec une couronne périphérique solidaire constituée d'une première demi-couronne 91 s'étendant dans la direction axiale aval, et d'une deuxième demi-couronne 92 s'étendant dans la direction axiale amont.

De façon correspondante, l'arbre d'entrée 37 est formé, de préférence d'une pièce, avec une paroi radiale 95 qui s'étend à l'intérieur du logement 53, et qui possède en périphérie une couronne axiale 97. La couronne axiale 97 s'étend de façon coaxiale et radialement extérieure par rapport à la demi-couronne aval 91. Le premier embrayage 33 est agencé entre ladite demi-couronne 91 et ladite couronne 97.

De la même façon, l'arbre de sortie 39 est formé, de préférence d'une seule pièce, avec une paroi radiale 105 qui s'étend à l'intérieur du logement 53, et qui présente à sa périphérie une couronne axiale 107. La couronne axiale 107 s'étend de façon coaxiale et radialement intérieure par rapport à la demi-couronne amont 92 de l'organe intermédiaire 73. Le deuxième embrayage 35 est agencé entre ladite demi-couronne 92 et ladite couronne axiale 107.

L'élément de transmission 25 comprend en outre un premier 111 et un deuxième 112 pistons d'actionnement respectivement du premier 33 et du deuxième 35 embrayages, ainsi qu'un premier 115 et un deuxième 116 organes-ressorts sollicitant respectivement le premier 111 et le deuxième 112 pistons en pression sur l'embrayage respectif 33, 35.

Entre le piston 112 et l'organe-ressort 116 est interposée, en appui axial, une entretoise présentant des doigts 117 essentiellement axiaux répartis sur la périphérie d'une couronne. Ces doigts 117 traversent la paroi 82.

Le premier embrayage 33 est essentiellement constitué d'une première série de disques 121 liés en rotation à la première demi-couronne 91 par des cannelures, et déplaçables axialement sur cette dernière, le long de ces cannelures, sous l'effet du piston 111 ; et d'une deuxième série de disques 122 liés en rotation à la couronne axiale 97 par des cannelures, et déplaçables axialement sur cette dernière, le long de ces cannelures également sous l'effet du piston 111. Les premiers 121 et deuxièmes 122 disques sont imbriqués les uns avec les autres de façon alternée.

Les disques 121, 122 sont arrêtés axialement par une butée 123 opposée au piston 111.

On comprend que les disques 121, 122 peuvent passer d'une position débrayée, dans laquelle les premiers disques 121 ne font pas contact avec les deuxièmes disques 122, et une position embrayée des premiers 121 et deuxièmes 122 disques dans laquelle les premiers 121 et deuxièmes 122 disques sont serrés les uns contre les autres.

Dans la position débrayée de l'embrayage 33, l'arbre d'entrée 37 et l'organe intermédiaire 73 sont libres en rotation l'un par rapport à l'autre.

Le premier organe-ressort 115, constitué dans l'exemple représenté d'une rondelle-ressort, du type par exemple rondelle Belleville, est fixée à la première paroi radiale 81, et sollicite le piston 111 dans la position embrayée.

Le deuxième embrayage 35 est de constitution et de fonctionnement analogues au premier : il comprend une première série de disques 131 associée à la deuxième demi-couronne 92, et une deuxième série de disques 132 intercalés, associée à la couronne axiale 107. Le déplacement axial des disques 131, 132 est limité par une butée 133.

Dans l'exemple représenté, l'organe-ressort 116 est une double rondelle ressort, du type Belleville, fixée à la deuxième paroi 82. L'organe-ressort 116 sollicite le piston 112 vers la position embrayée du deuxième embrayage 35, par l'intermédiaire des doigts 117.

Comme on le voit sur la figure 2, les deux embrayages 33, 35 sont décalés axialement et radialement suivant une disposition étagée ou « en escalier », à savoir que le premier embrayage 33 est disposé radialement à l'extérieur par rapport au deuxième embrayage 35. Ce dernier est agencé à l'intérieur du rotor 63.

L'élément de transmission 25 est en outre pourvu de butées à aiguilles, dont une première 141 est interposée axialement entre le roulement 65 et la paroi radiale 95 de l'arbre d'entrée 37 ; une deuxième 142 est interposée axialement entre la paroi radiale 95 et la paroi radiale 105 de l'arbre de sortie 39 ; une troisième 143 est interposée entre la paroi radiale 105 et la paroi radiale 84 de l'organe intermédiaire 73 ; et une quatrième 144 est interposée entre le moyeu 80 et un épaulement du tube 71.

Le tube de distribution de fluide 71 est adapté pour distribuer du fluide de lubrification et de refroidissement à l'intérieur de l'élément de transmission 25, c'est-à-dire à l'intérieur du logement 53. Ce dernier est fermé de façon étanche à ce fluide, notamment au niveau des jointures des deux demi-coquilles 51, 52 de carter, au moyen d'un joint périphérique 150.

Au voisinage de l'axe X, l'étanchéité de l'élément de transmission 25 au fluide de lubrification et de refroidissement est réalisée d'une part par un premier joint à lèvres 181, qui prend appui sur la première demi-coquille 51 et la surface extérieure de l'arbre creux 55, et par un deuxième joint à lèvres 182, qui prend appui sur la surface interne du tube 71 et sur les surfaces externes de l'arbre primaire d'entrée de boîte 47, et d'autre part par un joint torique 183 placé entre l'arbre d'entrée 37 et l'arbre creux 55.

Ce tube 71 présente, ménagé dans sa paroi, un premier canal radial 151 d'alimentation en fluide, un premier canal axial 153 de distribution relié audit canal d'alimentation 151, un orifice 155 ménagé entre le canal de distribution 153 et l'extérieur du tube 71, et un orifice 157 ménagé entre le canal de distribution 153 et l'intérieur du tube.

Le moyeu 80 de l'organe intermédiaire 73 est pourvu d'un canal 161 débouchant sur l'orifice 155, et mettant ainsi en communication le canal de distribution 153 et le logement 53.

En fonctionnement, le canal d'alimentation 151 est relié à un circuit d'alimentation en fluide de refroidissement et de lubrification. Ce fluide est diffusé à l'intérieur du logement 53 via le canal de distribution 153, l'orifice 155, et le canal 161, de façon à lubrifier et refroidir le premier embrayage 33, le deuxième embrayage 35, et le moteur électrique 31.

On notera que le fluide de lubrification et de refroidissement est diffusé radialement vers le stator 61, grâce notamment au passage 163 ménagé au niveau des dents 87. Le dimensionnement de ce passage 163 permet de maîtriser le débit de fluide organisé entre la partie du logement 53 intérieure au rotor 63, et la partie extérieure dans laquelle est agencé le stator 61.

On notera également que la disposition relative des embrayages 33, 35, et du moteur électrique 31, permet, du fait de la centrifugation du fluide de lubrification et de refroidissement, de conserver le premier embrayage 33 dans un bain de fluide de lubrification et de refroidissement, en fonctionnement de l'élément de transmission 25, tandis que la région du deuxième embrayage 35 est le siège d'un brouillard de ce même fluide. L'intérêt de cette disposition est d'adapter la quantité de fluide, présente dans la région de chaque embrayage, notamment à l'énergie calorifique générée par ces embrayages.

Le bain de fluide, en général d'huile, dans lequel est conservé l'embrayage 33, est nivelé grâce à un passage 164 au niveau de la paroi radiale 81.

Le premier embrayage 33 étant soumis à des échauffements plus importants que le deuxième 35, il est en effet nécessaire d'organiser, au voisinage du premier embrayage, un débit de fluide de refroidissement nettement plus important.

Les échauffements plus importants de l'embrayage 33 par rapport à l'embrayage 35 sont dus aux phases de glissement, qui sont plus contraignantes pour le premier que pour le second. Par ailleurs, le fait de maintenir l'embrayage 35 dans un brouillard de fluide, plutôt que dans un bain, permet de réduire les efforts de traînée de ce fluide sur l'arbre primaire de boîte.

D'autre part, le fluide de refroidissement et de lubrification est distribué vers le palier 57 et le roulement 65 pour refroidir et lubrifier ces derniers, par l'intermédiaire successivement : du canal de distribution 153 ; de l'orifice 157 ; d'un passage radial 171 formé dans l'arbre primaire d'entrée de boîte 47 ; d'un canal axial 172 pratiqué dans cet arbre ; d'un ajutage 175 permettant de régler le débit de fluide ; d'un canal axial 177 formé dans l'arbre d'entrée 37; et enfin d'un passage radial 179 débouchant au voisinage du palier 57.

Le fluide distribué suivant ce cheminement s'écoule dans le logement 53, au travers du palier 57, vers le roulement 65 et le rotor 63, puis vers le stator 61. Le stator 61 et le rotor 63 sont donc refroidis et lubrifiés non seulement par du fluide ayant transité par l'orifice 155 et les passages 163, 164, mais également par du fluide ayant transité par l'orifice 157 et le cheminement précédemment détaillé. Ce fluide permet également de lubrifier les butées 141, 142, 143.

On va maintenant décrire les dispositions permettant de déplacer les pistons ou plateaux de pression 111, 112 et ainsi de faire passer les embrayages 33, 35 d'une position à une autre parmi leurs positions embrayée et débrayée, et toutes positions intermédiaires.

Le premier piston 111 définit, avec la troisième paroi radiale 83 et la surface extérieure du moyeu 80, une première chambre de pression 201, tandis que le deuxième piston 112 définit, avec la quatrième paroi radiale 84 et la surface extérieure du moyeu 80, une deuxième chambre de pression 202.

La première chambre de pression 201 est rendue sensiblement étanche à un fluide de commande au moyen d'un joint à lèvres 205 fixé en périphérie de la paroi radiale 83, et portant sur une surface du piston 111, et d'un joint à lèvres 206 fixé sur un bord radialement interne du piston 111, et portant sur la surface extérieure du moyeu 80.

De façon analogue, la chambre de pression 202 est rendue sensiblement étanche par un premier joint 215 portant sur la paroi radiale 84 et le piston 112, et par un deuxième joint à lèvres 216 portant sur le piston 112 et la surface extérieure d'une pièce 217 rapportée sur le moyeu 80.

Chaque chambre de pression 201, 202 débouche dans l'alésage central du moyeu 80 via deux canaux respectifs 221, 222 de passage d'alimentation en fluide de commande, formés dans le moyeu 80.

Le tube de distribution de fluide 71 est pourvu, pour sa part, de deux canaux 231, 232 reliés à un circuit d'alimentation en fluide de commande via des canaux radiaux d'alimentation respectifs (non représentés) analogues au canal 151, et des canaux axiaux de distribution respectifs (non représentés) analogues au canal 153. Les canaux 231, 232 communiquent respectivement avec les passages 221, 222.

Dans l'exemple représenté, le fluide de commande est le même que le fluide de lubrification/refroidissement, les circuits de commande et de lubrification/refroidissement étant partiellement communs.

On comprend qu'à partir de la position initiale fermée de l'embrayage 33, 35, le passage à la position débrayée est réalisé par alimentation de la chambre de pression respective 201, 202 en fluide de commande sous pression. Le piston correspondant 111, 112 est alors déplacé axialement vers la direction aval, selon l'orientation de l'axe X (vers la gauche sur la figure 2), en comprimant l'organe ressort 115, 116 et en desserrant les empilages de disques 121, 122, 131, 132.

Sous l'effet du ressort 115, 116, le piston 111, 112 reprend sa position initiale lorsque l'on ramène la pression en fluide de commande dans la chambre de pression respective 201, 202 à sa valeur initiale basse. L'embrayage 33, 35 reprend alors sa position dite « naturellement fermée », c'est-à-dire embrayée, en l'absence d'alimentation de la chambre de pression 201, 202 en fluide de commande.

Il est entendu que les deux embrayages 33, 35 peuvent être actionnés indépendamment, et que la description qui précède relative au fonctionnement des embrayages 33, 35 s'applique à l'un et à l'autre de façon indépendante.

En outre, la pression de fluide de commande qui peut être délivrée aux chambres de pression 201, 202 peut varier sur une plage de valeurs, telle que l'embrayage correspondant 33, 35 peut être amené dans l'un parmi des états de transmission nulle (débrayée), totale (embrayée), ou partielle (glissante).

Il faut noter que la deuxième paroi radiale 82 et le piston 112 définissent entre eux une chambre de compensation 235, située du côté opposé à la deuxième chambre de pression 202 par rapport au piston 112. Cette chambre de compensation 235 est alimentée en fluide de lubrification et de refroidissement via le canal 161 et un orifice 237 ménagé dans la paroi radiale 82. Ainsi, à haut régime, les efforts supplémentaires engendrés sur le piston 112 par la centrifugation du fluide de commande contenu dans la deuxième chambre de pression 202 sont compensés, et le piston 112 fonctionne en permettant le passage, entre les disques 131, 132, du couple pour lequel il a été dimensionné. On peut également noter que le dimensionnement de l'embrayage 33, du piston 111, et du ressort 115, permet de s'affranchir d'une chambre de compensation pour la commande de cet embrayage 33.

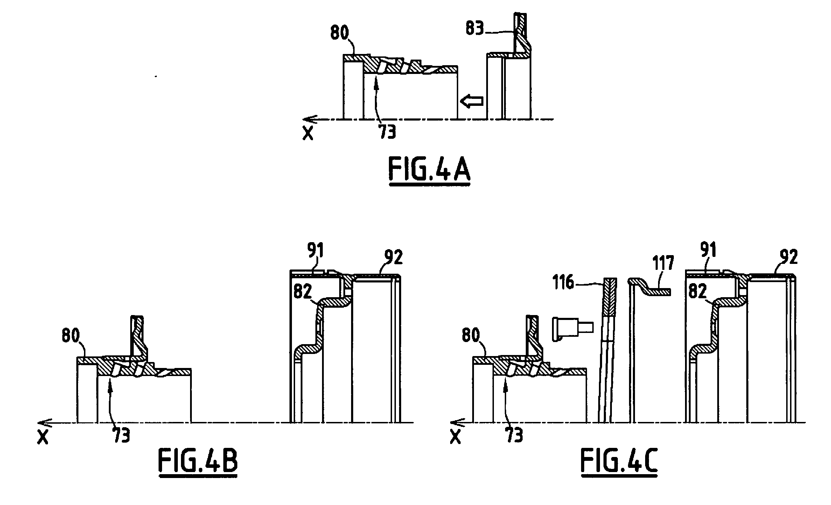

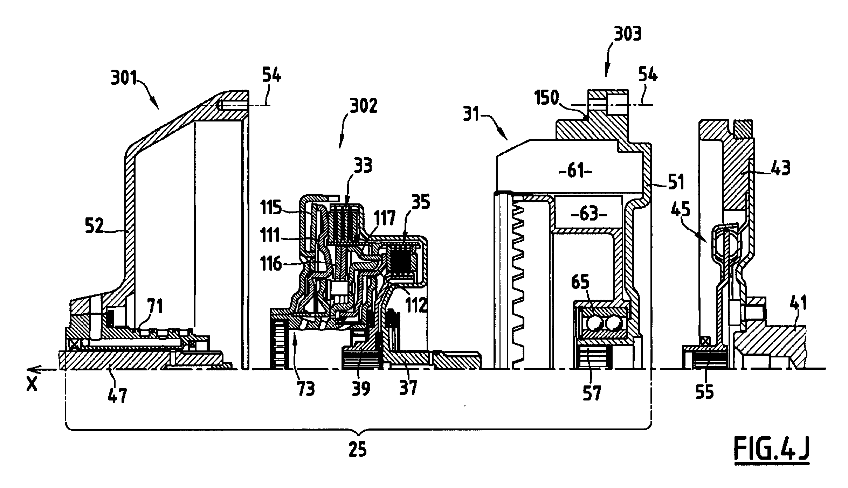

En référence aux Figures 4A à 4J, on va maintenant décrire des modes préférés d'assemblage de l'élément de transmission qui a été décrit précédemment.

Les Figures 4A à 4I illustrent le montage du module 302 de l'élément de transmission 25, qui comprend essentiellement les embrayages 33, 35, l'arbre d'entrée 37, l'arbre de sortie 39, l'organe intermédiaire 73, et les pistons 111, 112. Ce module 302 pourra être appelé « pack double embrayage ». C'est ce module qui a été représenté seul sur la Figure 3.

Les étapes principales de montage du pack double embrayage, illustrées par les Figures 4A à 4I, sont réalisées successivement, dans l'ordre des Figures. Dans une première étape (Figure 4A), on monte par emmanchement la paroi radiale 83 sur le moyeu 80 de l'organe intermédiaire 73.

Dans une deuxième étape (Figure 4B), on présente la pièce formant la paroi radiale 82 et les demi-couronnes d'embrayage 91, 92 axialement en regard de l'ensemble précédemment obtenu 73, 83.

Dans une troisième étape (Figure 4C), on lie axialement la paroi radiale 82 et l'organe-ressort 116, en interposant entre eux l'entretoise présentant les doigts axiaux 117, ce sous-ensemble 82, 116, 117 étant ensuite monté sur l'organe intermédiaire 73, les doigts 117 traversant alors la paroi radiale 82.

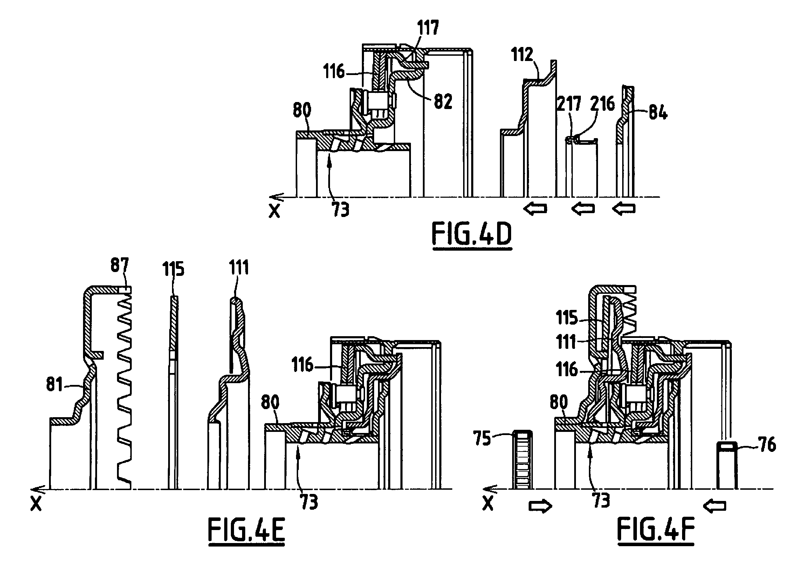

Dans une quatrième étape (Figure 4D), on enfile successivement sur le moyeu 80, du côté amont de l'ensemble obtenu précédemment, le deuxième piston 112, la pièce rapportée 217 supportant le joint 216, et la paroi radiale 84.

Dans une cinquième étape (Figure 4 E), on monte sur le moyeu 80, du côté aval de l'ensemble obtenu précédemment, le premier piston 111, l'organe-ressort 115, et la paroi radiale 81 munie des crabots périphériques 87.

Par exemple, on prémonte d'une part l'organe-ressort 115 sur la paroi 81, et d'autre part le piston 111 sur le moyeu 80, pour ensuite assembler le tout.

Dans une sixième étape (Figure 4F), les roulements 75, 76 sont emmanchés à l'intérieur du moyeu 80, respectivement du côté aval et du côté amont.

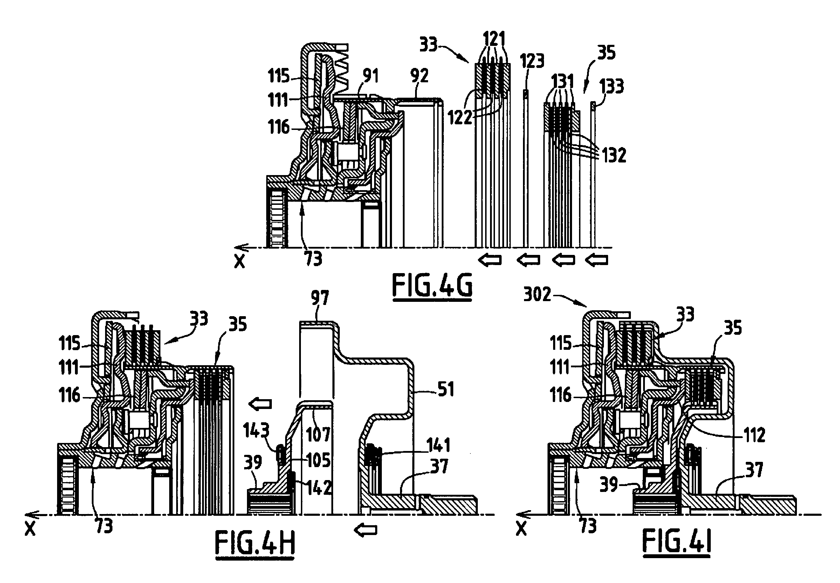

Dans une septième étape (Figure 4G), on monte du côté amont successivement
- le premier embrayage 33, c'est-à-dire l'empilage des disques 121, 122, extérieurement sur la demi-couronne 91 en guidant axialement les disques 121 sur les cannelures de la demi-couronne 91,
- la butée 123 jusqu'à sa position d'arrêt sur la demi-couronne 91,
- le deuxième embrayage 35, constitué de l'empilage des disques 131, 132, intérieurement sur la demi-couronne 92 en guidant axialement les disques 131 sur les cannelures de la demi-couronne 92, et
- la butée 133 sur la demi-couronne 92, jusqu'à sa position d'arrêt sur cette dernière.

Dans une huitième étape (Figure 4H), on monte successivement, du côté amont,
- l'arbre de sortie 39, muni des butées de roulement 142, 143, en guidant la couronne axiale 107 dans les cannelures intérieures des disques 132 du deuxième embrayage 35, et
- l'arbre d'entrée 37, muni de sa butée roulement 141, en guidant axialement la couronne 97 dans les cannelures externes des disques 122 du premier embrayage 33.

Le pack double embrayage ainsi assemblé se présente alors sous la forme d'un module 302 représenté sur la Figure 4I.

A l'issue des étapes précédentes, l'élément de transmission 25 se présente sous la forme de trois modules distincts préassemblés :
- le premier module 301 comprend essentiellement la deuxième demi-coquille de carter 52 et le tube de distribution de fluide 71, également appelé tube d'alimentation hydraulique ;
- le deuxième module 302, dont les étapes principales de montage ont été décrites précédemment ;
- le troisième module 303, que l'on pourra appeler « pack machine électrique » comprend essentiellement la première demi-coquille de carter 51, le moteur électrique 31 (stator 61 et rotor 63), le rotor étant monté à rotation sur la demi-coquille 51 par l'intermédiaire du roulement 65.

Le premier module 301 est préalablement monté sur la boîte de vitesses (représentée uniquement par son arbre primaire 47). On pourrait d'ailleurs prévoir que la deuxième demi-coquille 52 soit réalisée d'une pièce avec le carter de boîte de vitesses.

Suivant un premier mode de réalisation du procédé de montage de l'élément de transmission 25 :
- on monte le deuxième module 302 sur le premier module 301, l'arbre creux de sortie 39 étant alors mis en prise par emboîtement des cannelures avec l'extrémité de l'arbre primaire de boîte de vitesses 47, et l'organe intermédiaire 73 étant alors emboîté sur le tube de distribution 71, puis
- on monte le troisième module 303 sur l'ensemble ainsi obtenu, en enfilant la demi-coquille 51 avec son palier solidaire 57 sur l'arbre d'entrée 37, et en mettant en prise la liaison par crabots 87.

On active alors les moyens de fixation 54 des deux demi-coquilles 51, 52 du carter, de façon à réaliser l'assemblage serré de ces deux demi-coquilles.

Suivant un deuxième mode de réalisation du procédé de montage, on assemble en premier lieu les deuxième 302 et troisième 303 modules, et on monte l'ensemble ainsi obtenu sur le premier module 301, de façon analogue à ce qui a été décrit précédemment.

Il faut noter que, dans les deux modes de réalisation, les interfaces entre les modules 301 et 302 d'une part, et entre les modules 302 et 303 d'autre part, sont constituées par des cannelures.

A ce stade du montage, il est également important de noter que le tube de distribution 71 assure, outre sa fonction de base consistant à distribuer le fluide de commande et de lubrification/refroidissement, une fonction de centrage du pack double embrayage dans le carter 51, 52.

Quel que soit l'ordre de montage adopté, correspondant à l'un ou l'autre des deux modes de réalisation précédemment décrits, il ne reste plus qu'à accoster l'élément de transmission 25 ainsi constitué sur le moteur thermique. Pour ce faire, on engage le nez de vilebrequin 41 sur l'extrémité d'arbre 37, par l'intermédiaire de l'arbre creux 55 du dispositif amortisseur 45.

L'élément de transmission et les modes de montage qui viennent d'être décrits permettent, sur une chaîne de production de véhicules automobiles, de passer d'une configuration de transmission hybride à une configuration à transmission classique, et inversement, sans modification majeure des autres éléments de la chaîne de transmission ni du process de montage.

Cette conception permet également le centrage du pack machine électrique et du pack double embrayage de façon indépendante sur la première demi-coquille de carter.

La structure de l'élément de transmission conforme à l'invention permet de remplacer avantageusement un élément d'inertie extérieur à la boîte d'embrayage par le rotor de la machine électrique contenue dans l'élément de transmission.

Certains moteurs nécessitent en effet l'implantation d'un double volant amortisseur (DVA), constitué d'un élément d'inertie primaire et d'un élément d'inertie secondaire.

En remplaçant l'élément d'inertie secondaire d'un DVA par un organe de l'élément de transmission, on réduit l'encombrement axial et le coût du système d'amortissement.

## Revendications

1. Elément de transmission pour une chaîne de traction de type hybride parallèle, ledit élément (25) comprenant un arbre (37) d'entrée de mouvement destiné à être relié à un moteur thermique, un arbre (39) de sortie de mouvement destiné à être relié à une boîte de vitesses, une machine électrique (31) comportant un stator (61) et un rotor (63), un premier embrayage (33) de liaison entre l'arbre d'entrée (37) et un organe intermédiaire (73), et un second embrayage (35) de liaison entre l'organe intermédiaire (73) et l'arbre de sortie (39), l'organe intermédiaire (73) étant lié en rotation au rotor (63), comprenant un carter comportant une première demi-coquille (51) solidaire du stator (61) supportant à rotation l'arbre d'entrée (37) et le rotor (63), et une seconde demi-coquille (52) supportant à rotation l'arbre de sortie (39), ces deux demi-coquilles (51, 52) définissant un logement (53) dans lequel sont montés coaxialement les deux embrayages (33, 35) et la machine électrique (31), **caractérisé en ce que** l'organe intermédiaire (73) et le rotor (63) sont mutuellement en prise par des dentures complémentaires axiales (87).

2. Elément de transmission suivant la revendication 1, **caractérisé en ce que** les deux embrayages (33, 35) sont agencés radialement à l'intérieur de la machine électrique (31).

3. Elément de transmission suivant l'une quelconque des revendications 1 à 2, **caractérisé en ce que** les deux embrayages (33, 35), les arbres d'entrée (37) et de sortie (39), et l'organe intermédiaire (73) font partie d'un module (302) agencé d'un seul tenant dans le logement (53).

4. Elément de transmission suivant l'une quelconque des revendications 1 à 3, **caractérisé en ce que** les deux embrayages (33, 35) sont de type humide, le logement (53) étant fermé de façon étanche à un fluide de lubrification et/ou de refroidissement.

5. Elément de transmission suivant l'une quelconque des revendications 1 à 4, **caractérisé en ce que** les deux embrayages (33, 35) sont rappelés en position embrayée.

6. Elément de transmission suivant l'une quelconque des revendications 1 à 5, **caractérisé en ce que** les deux embrayages (33, 35) sont disposés de façon étagée, l'un étant disposé radialement à l'extérieur par rapport à l'autre.

7. Elément de transmission suivant la revendication 6, **caractérisé en ce que** le premier embrayage est disposé radialement à l'extérieur par rapport au deuxième embrayage.

8. Elément de transmission suivant la revendication 7, **caractérisé en ce que** le stator (61) est disposé radialement à l'extérieur du rotor (63), et le deuxième embrayage (35) est disposé radialement à l'intérieur du rotor (63).

9. Elément de transmission suivant l'une quelconque des revendications 1 à 8, **caractérisé en ce que** l'un au moins des embrayages (33, 35), de préférence les deux, est actionné au moyen d'un fluide de commande par l'intermédiaire d'une pièce de pression (111, 112) respective unique.

10. Elément de transmission suivant l'une quelconque des revendications 1 à 9, **caractérisé en ce qu'**il comporte un tube axial (71) d'alimentation en fluide, notamment d'alimentation hydraulique, solidaire de l'une (52) des demi-coquilles et faisant saillie vers l'intérieur du logement (53).

11. Véhicule automobile comprenant une chaîne de traction de type hydride parallèle, ladite chaîne de traction comprenant un moteur thermique (3), une boîte de vitesses (7), et un élément de transmission (25) selon l'une quelconque des revendications 1 à 10 reliant le moteur thermique (3) à la boîte de vitesses (7).

12. Procédé d'assemblage d'un élément de transmission suivant l'une quelconque des revendications 1 à 10, comprenant les étapes successives suivantes :
- on monte un sous-ensemble comprenant solidairement le premier embrayage (33), le deuxième embrayage (35), et l'organe intermédiaire (73), sur un sous-ensemble comprenant la deuxième demi-coquille (52) ; et
- on monte un sous-ensemble comprenant solidairement la première demi-coquille (51) et la machine électrique (31), sur l'ensemble ainsi formé.

13. Procédé d'assemblage d'un élément de transmission suivant l'une quelconque des revendications 1 à 10, comprenant les étapes successives suivantes :
- on monte un sous-ensemble comprenant solidairement le premier embrayage (33), le deuxième embrayage (35), et l'organe intermédiaire (73), sur un sous-ensemble comprenant solidairement la première demi-coquille (51) et la machine électrique (31) ; et
- on monte l'ensemble ainsi formé sur un sous-ensemble comprenant la deuxième demi-coquille (52).

14. Procédé selon la revendication 12 ou 13 d'assemblage d'un élément de transmission suivant la revendication 10, **caractérisé en ce qu'**on monte préalablement le tube d'alimentation (71) sur la deuxième demi-coquille (52), de façon à assembler le sous-ensemble comprenant la deuxième demi-coquille (52).

## Claims

1. Transmission element for a drivetrain of parallel hybrid type, the said element (25) comprising a movement input shaft (37) intended to be connected to a combustion engine, a movement output shaft (39) intended to be connected to a gearbox, an electric machine (31) comprising a stator (61) and a rotor (63), a first clutch (33) providing the connection between the input shaft (37) and an intermediate member (73), and a second clutch (35) providing the connection between the intermediate member (73) and the output shaft (39), the intermediate member (73) being connected in terms of rotation to the rotor (63), comprising a casing comprising a first half-shell (51) secured to the stator (61) and rotationally supporting the input shaft (37) and the rotor (63), a second half-shell (52) rotationally supporting the output shaft (39), these two half-shells (51, 52) defining a housing (53) in which the two clutches (33, 35) and the electric machine (31) are coaxially mounted, **characterized in that** the intermediate member (73) and the rotor (63) mesh with one another via complementary axial sets of teeth (87).

2. Transmission element according to Claim 1, **characterized in that** the two clutches (33, 35) are arranged radially inside the electric machine (31).

3. Transmission element according to either of Claims 1 and 2, **characterized in that** the two clutches (33, 35), the input shaft (37) and output shaft (39) and the intermediate member (73) form part of a module (302) arranged as a single piece in the housing (53).

4. Transmission element according to any one of Claims 1 to 3, **characterized in that** the two clutches (33, 35) are of the wet type, the housing (53) being sealed against a lubricating and/or cooling fluid.

5. Transmission element according to any one of Claims 1 to 4, **characterized in that** the two clutches (33, 35) are returned to the engaged position.

6. Transmission element according to any one of Claims 1 to 5, **characterized in that** the two clutches (33, 35) are arranged in a stepped configuration, one being arranged radially on the outside of the other.

7. Transmission element according to Claim 6, **characterized in that** the first clutch is arranged radially on the outside of the second clutch.

8. Transmission element according to Claim 7, **characterized in that** the stator (61) is arranged radially on the outside of the rotor (63) and the second clutch (35) is arranged radially on the inside of the rotor (63).

9. Transmission element according to any one of Claims 1 to 8, **characterized in that** at least one of the clutches (33, 35), and preferably both, is actuated by means of a control fluid via a respective single pressing component (111, 112).

10. Transmission element according to any one of Claims 1 to 9, **characterized in that** it comprises an axial fluid supply tube (71), particularly an axial hydraulic supply tube, secured to one (52) of the half-shells and projecting towards the inside of the housing (53).

11. Motor vehicle comprising a drivetrain of parallel hybrid type, the said drivetrain comprising a combustion engine (3), a gearbox (7) and a transmission element (25) according to any one of Claims 1 to 10 connecting the combustion engine (3) to the gearbox (7).

12. Method of assembling a transmission element according to any one of Claims 1 to 10, comprising the following successive steps:
- a subassembly securely comprising the first clutch (33), the second clutch (35) and the intermediate member (73) is mounted on a subassembly comprising the second half-shell (52); and
- a subassembly securely comprising the first half-shell (51) and the electric machine (31) is mounted on the assembly thus formed.

13. Method of assembling a transmission element according to any one of Claims 1 to 10, comprising the following successive steps:
- a subassembly securely comprising the first clutch (33), the second clutch (35) and the intermediate member (73) is mounted on a subassembly securely comprising the first half-shell (51) and the electric machine (31); and
- the assembly thus formed is mounted on a subassembly comprising the second half-shell (52).

14. Method according to Claim 12 or 13 for assembling a transmission element according to Claim 10, **characterized in that** the supply tube (71) is mounted beforehand on the second half-shell (52) so as to assemble the subassembly comprising the second half-shell (52).

## Patentansprüche

1. Getriebeelement für einen Antriebsstrang vom parallelhybriden Typ, wobei das Element (25) eine Antriebswelle (37), die dazu bestimmt ist, mit einem Verbrennungsmotor verbunden zu werden, eine Abtriebswelle (39), die dazu bestimmt ist, mit einem Schaltgetriebe verbunden zu werden, eine elektrische Maschine (31), die einen Stator (61) und einen Rotor (63) aufweist, eine erste Verbindungskupplung (33) zwischen der Antriebswelle (37) und einem Zwischenorgan (73), und eine zweite Verbindungskupplung (35) zwischen dem Zwischenorgan (73) und der Abtriebswelle (39), wobei das Zwischenorgan (73) in Drehung mit dem Rotor (63) verbunden ist, und ein Gehäuse enthält, das eine mit dem Stator (61) fest verbundene erste Halbschale (51), die die Antriebswelle (37) und den Rotor (63) drehbar trägt, und eine zweite Halbschale (52) aufweist, die die Abtriebswelle (39) drehbar trägt, wobei diese zwei Halbschalen (51, 52) eine Aufnahme (53) definieren, in die die zwei Kupplungen (33, 35) und die elektrische Maschine (31) koaxial montiert sind, **dadurch gekennzeichnet, dass** das Zwischenorgan (73) und der Rotor (63) über komplementäre axiale Zahnungen (87) gegenseitig in Eingriff sind.

2. Getriebeelement nach Anspruch 1, **dadurch gekennzeichnet, dass** die zwei Kupplungen (33, 35) radial innerhalb der elektrischen Maschine (31) angeordnet sind.

3. Getriebeelement nach einem der Ansprüche 1 bis 2, **dadurch gekennzeichnet, dass** die zwei Kupplungen (33, 35), die Antriebswelle (37) und die Abtriebswelle (39) und das Zwischenorgan (73) Teil eines Moduls (302) sind, das als Gesamtheit in der Aufnahme (53) angeordnet ist.

4. Getriebeelement nach einem der Ansprüche 1 bis 3, **dadurch gekennzeichnet, dass** die zwei Kupplungen (33, 35) vom feuchten Typ sind, wobei die Aufnahme (53) gegenüber einer Schmier- und/oder Kühlflüssigkeit dicht geschlossen ist.

5. Getriebeelement nach einem der Ansprüche 1 bis 4, **dadurch gekennzeichnet, dass** die zwei Kupplungen (33, 35) in die eingekuppelte Stellung zurückgestellt werden.

6. Getriebeelement nach einem der Ansprüche 1 bis 5, **dadurch gekennzeichnet, dass** die zwei Kupplungen gestuft angeordnet sind, wobei die eine (33, 35) bezüglich der anderen radial außen angeordnet ist.

7. Getriebeelement nach Anspruch 6, **dadurch gekennzeichnet, dass** die erste Kupplung bezüglich der zweiten Kupplung radial außen angeordnet ist.

8. Getriebeelement nach Anspruch 7, **dadurch gekennzeichnet, dass** der Stator (61) radial außerhalb des Rotors (63) angeordnet ist und die zweite Kupplung (35) radial innerhalb des Rotors (63) angeordnet ist.

9. Getriebeelement nach einem der Ansprüche 1 bis 8, **dadurch gekennzeichnet, dass** mindestens eine der Kupplungen (33, 35}, vorzugsweise beide, mittels eines Steuerfluids über ein jeweiliges einziges Druckbauteil (111, 112) betätigt wird.

10. Getriebeelement nach einem der Ansprüche 1 bis 9, **dadurch gekennzeichnet, dass** es ein axiales Fluidversorgungsrohr (71), insbesondere zur hydraulischen Versorgung, aufweist, das mit der einen (52) der Halbschalen fest verbunden ist und nach innerhalb der Aufnahme (53) vorsteht.

11. Kraftfahrzeug, das einen Antriebsstrang vom parallelhybriden Typ enthält, wobei der Antriebsstrang einen Verbrennungsmotor (3), ein Schaltgetriebe (7) und ein Getriebeelement (25) nach einem der Ansprüche 1 bis 10 aufweist, das den Verbrennungsmotor (3) mit dem Schaltgetriebe (7) verbindet.

12. Verfahren zum Zusammenbau eines Getriebeelements nach einem der Ansprüche 1 bis 10, das die folgenden aufeinanderfolgenden Schritte enthält:
- eine Untereinheit, die die erste Kupplung (33), die zweite Kupplung (35) und das Zwischenorgan (73) fest miteinander verbunden enthält, wird auf eine Untereinheit montiert, die die zweite Halbschale (52) enthält; und
- eine Untereinheit, die die erste Halbschale (51) und die elektrische Maschine {31} fest miteinander verbunden enthält, wird auf die so geformte Einheit montiert.

13. Verfahren zum Zusammenbau eines Getriebeelements nach einem der Ansprüche 1 bis 10, das die folgenden aufeinanderfolgenden Schritte enthält:
- eine Untereinheit, die die erste Kupplung (33), die zweite Kupplung (35) und das Zwischenorgan (73) fest miteinander verbunden enthält, wird auf eine Untereinheit montiert, die die erste Halbschale (51) und die elektrische Maschine (31) fest miteinander verbunden enthält; und
- die so geformte Einheit wird auf eine Untereinheit montiert, die die zweite Halbschale (52) enthält.

14. Verfahren nach Anspruch 12 oder 13 zum Zusammenbau eines Getriebeelements nach Anspruch 10, **dadurch gekennzeichnet, dass** vorher das Versorgungsrohr (71) auf die zweite Halbschale (52) montiert wird, um die die zweite Halbschale (52) enthaltende Untereinheit zusammenzubauen.
